# EUROPÄISCHE PATENTSCHRIFT

(11) **EP 1 792 487 B1**
(45) Veröffentlichungstag und Bekanntmachung des Hinweises auf die Patenterteilung: **18.06.2014**
(21) Anmeldenummer: 05779305.1
(22) Anmeldetag: 25.08.2005
(51) Int. Cl.: H04N 21/43, H04N 21/433, H04N 21/61, H04N 21/858

(54) **INTERAKTIVES FERNSEHEN MIT ZUSATZINFORMATIONEN UND RÜCKKANAL ÜBER EIN MOBILFUNKKOMMUNIKATIONSSYSTEM**
INTERACTIVE TELEVISION USING SUPPLEMENTARY INFORMATION AND A BACKWARD CHANNEL VIA A MOBILE RADIO COMMUNICATION SYSTEM
TELEVISION INTERACTIVE COMPRENANT DES INFORMATIONS SUPPLEMENTAIRES ET UN CANAL DE RETOUR, FONCTIONNANT PAR UN SYSTEME DE COMMUNICATION RADIO MOBILE

(30) Priorität: 20.09.2004 DE 102004045481
(43) Veröffentlichungstag der Anmeldung: 06.06.2007
(73) Patentinhaber: Siemens Aktiengesellschaft, 80333 München (DE)
(72) Erfinder: ILLGNER-FEHNS, Klaus, 81549 München (DE); RAUSCHENBACH, Uwe, 85586 Poing (DE); WAGNER, Marcel, 81667 München (DE)
(86) Internationale Anmeldenummer: PCT/EP2005/054187
(87) Internationale Veröffentlichungsnummer: WO 2006/032593

(56) Entgegenhaltungen:
- WO-A-01/65743
- WO-A-2004/055630
- DE-A1- 10 063 731
- GB-A- 2 365 682
- US-A1- 2003 037 340

## Beschreibung

Die Erfindung betrifft ein Verfahren zur Übertragung von Informationen an ein Endgerät und an ein Fernsehgerät. Weiterhin betrifft die Erfindung Vorrichtungen zur Durchführung des Verfahrens.

Der Begriff interaktives Fernsehen steht für Fernsehen, bei dem zu den üblichen audiovisuellen Inhalten bzw. Informationen ergänzende Informationen und somit eine Möglichkeit zur Interaktion angeboten werden. Durch die Zusatzinformationen wird dem Nutzer die Möglichkeit gegeben, eine Rückmeldung in Bezug auf den Inhalt des Fernsehprogramms zu geben. Beispiele hierfür sind Teleshopping, bei welchem ein Nutzer ein im Fernsehen angebotenes Produkt kaufen kann, oder Abstimmungen in Bezug auf den weiteren Verlauf einer Fernsehsendung, z.B. durch Auswahl von Kandidaten einer Show.

Ein Nutzer, welcher interaktives Fernsehen empfangen möchte, muss hierzu eine Set-Top-Box mit dem Fernsehgerät verbinden, welche zusätzlich zum Dekodieren der üblichen audiovisuellen Inhalte die Darstellung der ergänzenden Informationen durch das Fernsehgerät ermöglicht. Die ergänzenden Informationen können von dem Fernsehgerät alternativ zum sonstigen Programmverlauf angezeigt werden, sie können dem laufenden Programm überlagert werden, oder auch in einem Modus dargestellt werden, in welchem sowohl die zusätzlichen Informationen, als auch ein verkleinertes Bild des Programms sichtbar sind.

Interaktionen sind ohne die Verwendung von Set-Top-Boxen z.B. dadurch möglich, dass durch die ergänzenden Informationen explizit auf die Interaktionsoperationen hingewiesen wird, z.B. durch Anzeigen einer Internet-Adresse oder einer Telefonnummer. Der Nutzer verwendet dann ein zusätzliches Gerät, wie z.B. sein Telefon, Mobiltelefon oder PC, um Rückmeldung zu geben. Beispielsweise kann an eine im Fernsehen eingeblendete Nummer eine SMS (Short Message Service) über ein Mobilunknetz gesendet werden. Es ist auch möglich, dass die Rückmeldung über die Set-Top-Box erfolgt, wenn diese über einen geeigneten Rückkanal, wie z.B. über das Internet über DSL (Digital Subscriber Line), verfügt.

Der Erfindung liegt die Aufgabe zugrunde, ein effizientes Verfahren zum interaktiven Fernsehen vorzustellen. Weiterhin sollen geeignete Vorrichtungen zum Durchführen des Verfahrens vorgestellt werden.

Diese Aufgabe wird durch ein Verfahren mit den Merkmalen des Patentanspruchs 1 und durch Vorrichtungen mit den Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren werden erste Informationen, welche zweite Informationen ergänzen, an ein Endgerät übertragen zum visuellen Anzeigen durch das Endgerät parallel zum Abspielen der zweiten Informationen durch ein Fernsehgerät.

Bei den zweiten Informationen kann es sich um Audio- und/oder visuelle Informationen handeln. Für die Übertragung der zweiten Informationen an das Fernsehgerät ist grundsätzlich jede Art der Fernsehinformationsübertragung möglich, zum Beispiel über DVB (Digital Video Broadcast). Bei dem Endgerät, an welches die ersten Informationen übertragen werden, kann es sich zum Beispiel um ein mobiles Funkgerät, ein Mobiltelefon, oder um einen mobilen oder einen stationären Computer handeln. Die Art der Übertragung der ersten Informationen an das Endgerät hängt von der Anbindung dieses Endgerätes an eines oder mehrere Kommunikationssysteme ab. So können die ersten Informationen zum Beispiel über Funk, insbesondere über ein zellulares Mobilfunkkommunikationssystem nach den Standards GSM oder UMTS, über DVB-H (Digital Video Broadcast Handheld, beschrieben z.B. in "Digital Video Broadcasting (DVB); Transmission System for Handheld Terminals (DVB-H), ETSI EN 302 304 V1.1.1"), oder auch über das Internet übertragen werden.

Die ersten und die zweiten Informationen werden gemäß der Erfindung nicht auf dem gleichen Gerät angezeigt bzw. abgespielt, da die ersten Informationen von dem Endgerät angezeigt werden, während die zweiten Informationen von dem Fernsehgerät abgespielt werden. Vorteilhaft ist es insbesondere, wenn für die Übertragung der ersten und der zweiten Informationen voneinander verschiedene, getrennte Übertragungsnetze eingesetzt werden, wie zum Beispiel ein Mobilfunknetz und ein Netz zur Übertragung von Fernsehinformationen. Die ersten Informationen ergänzen die zweiten Informationen, dass heißt es existiert ein inhaltlicher Zusammenhang zwischen den ersten und den zweiten Informationen, ohne dass die ersten und die zweiten Informationen inhaltlich identisch sind. Vielmehr hängt der zeitliche Verlauf der ersten Informationen vom zeitlichen Verlauf der zweiten Informationen ab. Die ersten Informationen sind vom Endgerät parallel zum Abspielen der zweiten Informationen durch das Fernsehgerät anzuzeigen; dies bedeutet, dass jeweils zueinander korrelierende Informationsanteile der ersten und der zweiten Informationen in etwa gleichzeitig angezeigt bzw. abgespielt werden und somit vom Nutzer des Endgerätes und des Fernsehgerätes wahrnehmbar sind.

In Weiterbildung der Erfindung ermöglichen die ersten Informationen eine Rückmeldung des Nutzers des Endgerätes auf die zweiten Informationen. Eine Rückmeldung kann zum Beispiel aus einer Mitteilung des Nutzers über einen von ihm beabsichtigten Kauf eines angebotenen Produktes oder aus der Abgabe einer Abstimmungsstimme bestehen. Mit Vorzug wird eine Rückmeldung des Nutzers des Endgerätes über einen Mobilfunkkanal empfangen. Hierzu kann zum Beispiel ein Kanal verwendet werden, welcher von einem Mobilfunknetz, mit welchem das Endgerät kommunizieren kann, unter anderem oder eigens für derartige Rückmeldung eingerichtet wurde.

Einer vorteilhaften Ausgestaltung der Erfindung gemäß werden die ersten Informationen über einen Broadcast- oder einen Multicast-Kanal an eine Mehrzahl von Endgeräten übertragen. Dies ermöglicht eine ressourcensparende Verteilung der ersten Informationen.

In Weiterbildung der Erfindung werden die ersten Informationen an das Endgerät übertragen synchronisiert mit der Übertragung der zweiten Informationen an das Fernsehgerät. Die Synchronisierung kann vorgenommen werden durch eine Einrichtung oder ein Kommunikationsnetz, welches dem Endgerät die ersten Informationen zur Verfügung stellt.

Vorteilhaft ist es, wenn die ersten Informationen von dem Endgerät empfangen, zwischengespeichert und synchronisiert mit dem Abspielen der zweiten Informationen angezeigt werden. In diesem Fall müssen die ersten Informationen von dem Endgerät nicht notwendigerweise synchronisiert mit den zweiten Informationen empfangen werden, vielmehr kann das Endgerät die Anzeige der ersten Informationen verzögern und somit eine Synchronisierung zu den zweiten Informationen bzw. zu dem Abspielen der zweiten Informationen vornehmen. Hierzu können die ersten Informationen mit Zeitmarken versehen sein, welche es dem Endgerät ermöglichen, zu bestimmen, wie lange die ersten Informationen zwischengespeichert werden.

In Ausgestaltung der Erfindung wird ein Verfahren zur Synchronisation zwischen den ersten und den zweiten Informationen durchgeführt, bei dem ein von dem Endgerät aufgezeichneter Teil der zweiten Informationen empfangen und eine Verzögerungszeit in Bezug auf die ersten Informationen bestimmt wird. Der Empfang und die Bestimmung erfolgt durch eine oder mehrere geeignete Einrichtungen eines Kommunikationsnetzes, mit welchem das Endgerät kommuniziert. Bei der Verzögerungszeit kann es sich zum Beispiel um eine Zeitspanne handeln, welche vor der Übertragung der ersten Informationen an das Endgerät einzuhalten ist, und/oder welche vor dem Anzeigen der ersten Informationen durch das Endgerät einzuhalten ist. Die bestimmte Verzögerungszeit kann gegebenenfalls an das Endgerät übertragen werden.

In Ausgestaltung der Erfindung wird ein Verfahren zur Synchronisation zwischen den ersten und den zweiten Informationen durchgeführt, bei dem Informationen über eine Verzögerungszeit, welche vor dem Anzeigen der ersten Informationen von dem Endgerät einzuhalten ist, von einem anderen Endgerät an das Endgerät übertragen werden. Somit ist es möglich, dass eine zuvor in Bezug auf ein Endgerät bestimmte Verzögerungszeit in Bezug auf verschiedene Endgeräte angewandt wird.

Einer Ausgestaltung der Erfindung gemäß wird ein Verfahren zur Synchronisation zwischen den ersten und den zweiten Informationen durchgeführt, bei dem vom Fernsehgerät Informationen über eine Verzögerungszeit ausgegeben werden, welche vor dem Anzeigen der ersten Informationen von dem Endgerät einzuhalten ist. Diese Informationen über eine Verzögerungszeit können zum Beispiel über Videotext zur Verfügung gestellt wird.

Das erfindungsgemäße Endgerät weist Mittel zum Empfangen von ersten Informationen auf, welche zweite Informationen ergänzen, und Mittel zum visuellen Anzeigen der ersten Informationen parallel zum Abspielen der zweiten Informationen durch ein Fernsehgerät. Insbesondere ist es möglich, dass das erfindungsgemäße Endgerät weiterhin Mittel zum zeitversetzten visuellen Anzeigen der ersten Informationen gegenüber dem Empfang der ersten Informationen aufweist, und/oder Mittel zum Zwischenspeichern der empfangenen ersten Informationen vor dem visuellen Anzeigen.

Die erfindungsgemäße Einrichtung weist Mittel auf zur Übertragung von ersten Informationen, welche zweite Informationen ergänzen, an ein Endgerät zum visuellen Anzeigen durch das Endgerät parallel zum Abspielen der zweiten Information durch ein Fernsehgerät. Die erfindungsgemäße Einrichtung kann durch mehrere miteinander verbundene Einrichtungen mit den jeweiligen Mitteln realisiert werden. Die erfindungsgemäße Einrichtung kann weiterhin aufweisen: Mittel zur Übertragung der ersten Informationen synchronisiert zu den zweiten Informationen, und/oder Mittel zum Erstellen und Übertragen von Synchronisationsinformationen an das Endgerät, welche dem Endgerät das synchronisierte Anzeigen der ersten Informationen mit dem Abspielen der zweiten Informationen ermöglichen.

Sowohl das erfindungsgemäße Endgerät als auch die erfindungsgemäße Einrichtung dienen insbesondere der Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausfuhrungsbeispiels näher erläutert. Dabei zeigt:

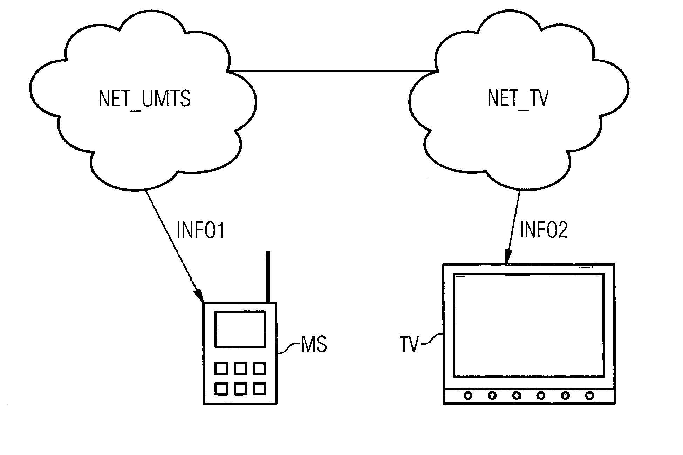

Figur 1: zwei Kommunikationssysteme.

Figur 1 zeigt ein Fernsehgerät TV, welches mit einem System NET_TV zur Verteilung von Fernseh-Informationen INF02 verbunden ist. Die Art der Verteilung der Fernseh-Informationen INF02 ist für die vorliegende Erfindung nicht relevant, Beispiele sind die analoge Versendung über Kabel, terrestrischen Rundfunk oder Satellit, sowie die digitale Versendung über Kabel (DVB-C, Digital Video Broadcast Cable), terrestrischen Rundfunk (DVB-T, Digital Video Broadcast Terrestrial)oder Satellit (DVB-S, Digital Video Broadcast Satellite).

Weiterhin zeigt Figur 1 ein mobiles Funkgerät MS, welches über eine Funkschnittstelle mit einem Mobilfunkkommunikationsnetz NET_UMTS verbunden ist. Die konkrete Ausgestaltung des Mobilfunkkommunikationssystems ist für die vorliegende Erfindung nicht relevant, Beispiele sind Systeme nach dem Standard GSM (Global System for Mobile Communication), UMTS (Universal Mobile Telecommunications System), DVB-H (Digital Video Broadcast Handheld), DAB (Digital Audio Broadcasting), oder auch WLANs (Wireless Local Area Network).

Von dem Mobilfunkkommunikationsnetz NET_UMTS werden Zusatz- bzw. ergänzende Informationen INFO1 zu den Fernseh-Informationen INF02 an das mobile Funkgerät MS gesendet und von diesem angezeigt. Bei den Zusatzinformationen INFO1 handelt es sich um Informationen, welche dem Nutzer des Fernsehgerätes TV und des mobilen Funkgerätes MS das interaktive Fernsehen ermöglichen. Die Zusatzinformationen INF01 sind inhaltlich korreliert zu den Fernseh-Infofmationen INFO2. Es handelt sich somit bei den Zusatzinformationen INF01 um den Fernseh-Informationen INF02 assoziierte Inhalte, wobei der zeitliche Verlauf der Zusatzinformationen INF01 von dem zeitlichen Verlauf der Fernseh-Informationen INF02 abhängt. Die Zusatzinformationen INFO1 können z.B. aus einer Internetseite bestehen, so dass der Nutzer ihm angezeigte Schaltflächen durch die Eingabemöglichkeiten des mobilen Funkgerätes MS auswählen kann. Eine Rückmeldung erfolgt dann gegebenenfalls über einen für derartige Rückmeldungen vom Mobilfunkkommunikationsnetz NET_UMTS zur Verfügung gestellten Funkkanal.

Die Zusatzinformationen INFO1 können über eine Punkt-zu-Punkt Verbindung zwischen dem Mobilfunkkommunikationsnetz NET_UMTS und dem mobilen Funkgerät MS versendet werden, z.B. über den Dienst GPRS (General Packet Radio Service). Vorteilhaft ist jedoch die Verwerdung von Broadcast- oder Multicast-Nachrichten, z.B. über MBMS (Multimedia Broadcast and Multicast Service), oder über DVB-H (DVB-H, Digital Video Broadcast Handy) / CBMS (Convergence of Broadcast and Mobile Services).

Die Erfindung ermöglicht es einem Nutzer des interaktiven Fernsehens, das TV-Programm, d.h. die Fernseh-Informationen INF02, und die assoziierten Interaktionsinhalte, d.h. die Zusatzinformationen INFO1, über zwei nicht miteinander verbundene Geräte, d.h. über das Fernsehgerät TV und das mobile Funkgerät MS, zu empfangen und darstellen zu lassen. Auch die Verteilung der Fernseh-Informationen INF02 und der Zusatzinformationen INFO1 erfolgt über voneinander unabhängige Netze, einerseits über das System NET_TV zur Verteilung von Fernseh-Informationen INFO2 und andererseits über das Mobilfunkkommunikationsnetz NET_UMTS. Üblicherweise muss der Nutzer einen Kontextwechsel durchführen, wenn er beim interaktiven Fernsehen eine Rückmeldung abzugeben beabsichtigt. So werden die Zusatzinformationen INF01 gemäß dem Stand der Technik vom Ersteller der Fernseh-Informationen INF02 in dieses eingeblendet und auf dem Fernsehgerät TV dargestellt. Eine Rückmeldung erfolgt dann durch das Senden einer SMS an eine eingeblendete Telefonnummer, das Ansurfen einer eingeblendeten Internetadresse oder das Senden einer Email an eine eingeblendete Email-Adresse.

Von Vorteil ist, dass aufgrund der Erfindung zur Nutzung interaktiver Fernsehdienste die vorhandene TV-Infrastruktur im Haushalt eines Nutzers weiterbetrieben werden kann und die Mehrwertdienste des interaktiven Fernsehens über ein mobiles Funkgerät zur Verfügung gestellt werden können, ohne dass der Nutzer eine Set-Top-Box anschaffen muss.

Die Fernseh-Informationen INF02 und die Zusatzinformationen INF01 können zur Vermeidung von Zeitverzögerungen zwischen dem Abspielen des TV- und des interaktiven Inhaltes synchronisiert werden. Hierzu werden die Zusatzinformationen INFO1 über einen Mobilfunkkanal an das mobile Funkgerät MS übertragen, unter Nutzung eines geeigneten Verzögerungspuffers verzögert bzw. zwischengespeichert und zum richtigen, d.h. synchronisierten, Zeitpunkt angezeigt, so dass die Fernseh-Informationen INF02 und die inhaltlich korrelierten Zusatzinformationen INF01 etwa zur gleichen Zeit für den Nutzer wahrnehmbar sind. Die Länge der Verzögerungszeit hängt vom verwendeten Übertragungssystem für die Fernseh-Informationen INF02 ab. Die Verzögerungszeit kann in einem Kalibrierungsschritt bestimmt werden, wobei ein derartiger Kalibrierungsschritt im Prinzip nur einmalig, d.h. als Anpassung des mobilen Funkgerätes MS an das Fernsehgerät TV, durchgeführt werden muss. Falls das Fernsehgerät TV die Fernseh-Informationen INF02 auf verschiedenen Wegen empfangen kann, ist die Kalibrierung für jede Art der Verbreitung der Fernseh-Informationen INF02 durchzuführen. So verursacht beispielsweise eine Satellitenübertragung eine Signalverzögerung der Fernseh-Informationen INF02 in der Größenordnung einiger Sekunden. Dies sollte vor dem Anzeigen der Zusatzinformationen INFO1 auf dem mobilen Funkgerät MS berücksichtigt werden.

Der Kalibrierungsschritt kann so ausgestaltet sein, dass von dem mobilen Funkgerät MS der Fernsehton und/oder das Fernsehbild aufgezeichnet und an das Mobilfunkkommunikationsnetz NET_UMTS gesendet wird. Die Versendung kann in Echtzeit über den Sprach- oder Videotelephoniekanal erfolgen, oder mit einem Zeitstempel, welcher den Zeitpunkt der Aufnahme in Bezug auf die innere Uhr des mobilen Funkgerätes MS anzeigt, versehen über ein Store-and-Forward Übertragungsverfahren wie z.B. MMS (Multimedia Messaging Service). Im Mobilfunkkommunikationsnetz NET_UMTS wird der empfangene Ton bzw. die empfangenen Bilder mit dem aktuellen Fernsehprogramm verglichen, welches das Mobilfunkkommunikationsnetz NET_UMTS empfangen kann. Hierzu ist in Figur 1 eine Verbindung zwischen dem Mobilfunkkommunikationsnetz NET_UMTS und dem System NET_TV zur Verteilung von Fernseh-Informationen eingezeichnet. Weiterhin ist dem Mobilfunkkommunikationsnetz NET_UMTS die Zeitspanne, welche für die Übertragung der Zusatzinformationen INF01 von dem Mobilfunkkommunikationsnetz NET_UMTS an das mobile Funkgerät MS benötigt wird, bekannt. Aus der aufgrund der Versendung des Fernsehtones und/oder Fernsehbildes gewonnenen Kenntnis des Zeitpunktes, wann die Fernseh-Informationen INF02 auf dem Fernsehgerät TV abgespielt wurden, kann das Mobilfunkkommunikationsnetz NET_UMTS den Zeitpunkt bestimmen, zu welchem die Zusatzinformationen INF01 von dem mobilen Funkgerät MS anzuzeigen sind, oder alternativ die Verzögerungszeit, während welcher die Zusatzinformationen INFO1 von dem mobilen Funkgerät MS vor dem Abspielen zwischenzuspeichern sind. Dieser Zeitpunkt bzw. diese Zeitspanne wird im Anschluss dem mobilen Funkgerät MS mitgeteilt.

Wurde eine derartige Synchronisierung zwischen einem mobilen Funkgerät MS und einem Fernsehgerät TV durchgeführt, so können die gewonnenen Kalibrierungsdaten auch in Bezug auf ein anderes mobiles Funkgerät, welches Zusatzinformationen INFO1 zu einem Programm des gleichen Fernsehgerätes TV empfangen soll, verwendet werden. Hierzu können sie entweder von mobilem Funkgerät zu mobilem Funkgerät übertragen werden oder auch vom Mobilfunkkommunikationsnetz NET_UMTS an das weitere mobile Funkgerät übertragen werden.

Ein andere Möglichkeit für einen Kalibrierungsschritt besteht darin, für jeden Übertragungsweg der Fernseh-Informationen INF02 auf einer Tafel des Videotextes des Fernsehgerätes TV einen Code zur Verfügung zu stellen, welchen der Nutzer in das mobile Funkgerät MS eingibt. Diesem Code kann das mobile Funkgerät dann die passende Verzögerungszeit entnehmen. Eine weitere Möglichkeit besteht darin, dass der Nutzer die Uhr des mobilen Funkgerätes manuell in Übereinstimmung bringt mit der im Videotext laufenden Uhr.

Neben dem beschriebenen Fall, dass die Zusatzinformationen INFO1 von dem mobilen Funkgerät MS zwischengespeichert und synchron zu den Fernseh-Informationen INF02 angezeigt werden, ist es auch möglich, dass das Mobilfunkkommunikationsnetz NET_UMTS die Verzögerungszeit berücksichtigt, indem die Zusatzinformationen INFO1 verzögert an das mobile Funkgerät MS übertragen werden. Das mobile Funkgerät MS kann die Zusatzinformationen INF01 dann ohne Verzögerung abspielen.

Die Erfindung kann mit Vorteil angewendet werden auf Abstimmungen/Wahlen (Voting), wobei auf das mobile Funkgerät MS Aufforderungen zur Abstimmung übertragen werden, die das auf dem Fernsehgerät TV laufende Programm beeinflussen, auf Quiz-Veranstaltungen, wobei dem Nutzer die Möglichkeit gegeben wird, seine Antworten auf gestellte Fragen in das mobile Funkgerät MS einzugeben, auf Spontankäufe oder TV-Commerce, wobei der Nutzer während des laufenden Programms beworbene oder vorgestellte Artikel bestellen kann, auf Messaging, wobei die Möglichkeit der Versendung von bestimmten Inhalten gegeben wird, z.B. "Sende diesen Clip an einen Freund", auf Communities, wobei z.B. ein Chat zu einer Sendung zur Verfügung gestellt wird, und auf Gaming, z.B. im Rahmen eines Gewinnspiels, das sich direkt auf ein laufendes Programm bezieht. von Vorteil in Bezug auf Käufe bzw. Bestellungen ist insbesondere, dass eine eindeutige Erkennung bzw. Authentisierung des Nutzers über das Mobilfunkkommunikationsnetz NET_UMTS sichergestellt ist.

## Patentansprüche

1. Verfahren zur Übertragung von Informationen, bei dem erste Informationen (INFO1), welche zweite Informationen (IN-FO2) ergänzen, an ein Endgerät (MS) übertragen werden zum visuellen Anzeigen durch das Endgerät (MS) parallel zum Abspielen der zweiten Informationen (INF02) durch ein Fernsehgerät (TV), wobei die ersten Informationen (INFO1) von dem Endgerät (MS) empfangen, zwischengespeichert und unter Verwendung einer Verzögerungszeit synchronisiert mit dem Abspielen der zweiten Informationen (INF02) angezeigt werden,
**dadurch gekennzeichnet, dass** die Verzögerungszeit von einem für die Übertragung der zweiten Informationen (INF02) verwendeten System abhängt.

2. Verfahren nach Anspruch 1, **dadurch gekennzeichnet, dass** die ersten Informationen (INFO1) eine Rückmeldung des Nutzers des Endgerätes (MS) auf die zweiten Informationen (INF02) ermöglichen.

3. Verfahren nach Anspruch 2, **dadurch gekennzeichnet, dass** eine Rückmeldung des Nutzers des Endgerätes (MS) über einen Mobilfunkkanal empfangen wird.

4. Verfahren nach einem der Ansprüche 1 bis 3, **dadurch gekennzeichnet, dass** die ersten Informationen (INFO1) über einen Broadcast- oder einen Multicast-Kanal an eine Mehrzahl von Endgeräten (MS) übertragen werden.

5. Verfahren nach einem der Ansprüche 1 bis 3, **dadurch gekennzeichnet, dass** die ersten Informationen (INFO1) über einen Unicast-Kanal an das Endgerät (MS) übertragen werden.

6. Verfahren nach einem der Ansprüche 1 bis 5, **dadurch gekennzeichnet, dass** die ersten Informationen (INFO1) übertragen werden synchronisiert mit der Übertragung der zweiten Informationen (INF02) an das Fernsehgerät (TV).

7. Verfahren nach einem der Ansprüche 1 bis 6, **dadurch gekennzeichnet, dass** ein Verfahren zur Synchronisation zwischen den ersten (INFO1) und den zweiten (INF02) Informationen durchgeführt wird, bei dem ein von dem Endgerät (MS) aufgezeichneter und versendeter Teil der zweiten Informationen (INF02) empfangen wird, und eine Verzögerungszeit in Bezug auf die ersten (INFO1) Informationen bestimmt wird.

8. Verfahren nach einem der Ansprüche 1 bis 7, **dadurch gekennzeichnet, dass** ein Verfahren zur Synchronisation zwischen den ersten (INFO1) und den zweiten (INF02) Informationen durchgeführt wird, bei dem Informationen über eine Verzögerungszeit, welche vor dem Anzeigen der ersten Informationen (INFO1) von dem Endgerät (MS) einzuhalten ist, von einem anderen Endgerät an das Endgerät (MS) übertragen werden.

9. Verfahren nach einem der Ansprüche 1 bis 6, **dadurch gekennzeichnet, dass** ein Verfahren zur Synchronisation zwischen den ersten (INFO1) und den zweiten (INFO2) Informationen durchgeführt wird, bei dem vom Fernsehgerät (TV) Informationen über eine Verzögerungszeit ausgegeben werden, welche vor dem Anzeigen der ersten Informationen (INFO1) von dem Endgerät (MS) einzuhalten ist.

10. Endgerät (MS) mit Mitteln zum Empfangen und Zwischenspeichern von ersten Informationen (INFO1), welche zweite Informationen (INF02) ergänzen, und Mitteln zum visuellen Anzeigen der ersten Informationen (INFO1) parallel zum Abspielen der zweiten Informationen (INF02) durch ein Fernsehgerät (TV), derart ausgestaltet, dass die ersten Informationen (INFO1) unter Verwendung einer Verzögerungszeit synchronisiert zum Abspielen der zweiten Informationen (INFO2) angezeigt werden,
**dadurch gekennzeichnet, dass** die Verzögerungszeit von einem für die Übertragung der zweiten Informationen (INF02) verwendeten System abhängt.

## Claims

1. Method for transmitting information, in which first information (INFO1), which supplements second information (INF02), is transmitted to a terminal (MS) for visual display by the terminal (MS) in parallel with the replay of the second information (INF02) by a television set (TV), the first information (INFO1) being received by the terminal (MS), buffer-stored and displayed in a manner synchronized with the replay of the second information (INF02) using a delay time, **characterized in that** the delay time depends on a system used for the transmission of the second information (INF02).

2. Method according to Claim 1,
**characterized**
**in that** the first information (INFO1) enables a return message from the user of the terminal (MS) in response to the second information (INF02).

3. Method according to Claim 2,
**characterized**
**in that** a return message from the user of the terminal (MS) is received via a mobile radio channel.

4. Method according to one of Claims 1 to 3,
**characterized**
**in that** the first information (INFO1) is transmitted to a plurality of terminals (MS) via a broadcast channel or a multicast channel.

5. Method according to one of Claims 1 to 3,
**characterized**
**in that** the first information (INFO1) is transmitted to the terminal (MS) via a unicast channel.

6. Method according to one of Claims 1 to 5,
**characterized**
**in that** the first information (INFO1) is transmitted in a manner synchronized with the transmission of the second information (INF02) to the television set (TV).

7. Method according to one of Claims 1 to 6,
**characterized**
**in that** a method for synchronization between the first (INFO1) and the second (INF02) information is carried out in which a portion of the second information (INF02) which is recorded and sent by the terminal (MS) is received, and
a delay time with regard to the first (INFO1) information is determined.

8. Method according to one of Claims 1 to 7,
**characterized**
**in that** a method for synchronization between the first (INFO1) and the second (INF02) information is carried out in which information about a delay time which is to be complied with prior to the display of the first information (INFO1) by the terminal (MS) is transmitted to the terminal (MS) from another terminal.

9. Method according to one of Claims 1 to 6,
**characterized**
**in that** a method for synchronization between the first (INFO1) and the second (INF02) information is carried out in which the television set (TV) outputs information about a delay time which is to be complied with prior to the display of the first information (INFO1) by the terminal (MS).

10. Terminal (MS) comprising
means for receiving and buffer-storing first information (INFO1), which supplements second information (INF02), and means for the visual display of the first information (INFO1) in parallel with the replay of the second information (INF02) by a television set (TV), configured in such a way that the first information (INFO1) is displayed in a manner synchronized with the replay of the second information (INF02) using a delay time, **characterized in that** the delay time depends on a system used for the transmission of the second information (INF02).

## Revendications

1. Procédé de transmission d'informations, selon lequel des premières informations (INFO1) qui complètent des deuxièmes informations (INF02) sont transmises à un terminal (MS) pour l'affichage visuel par le terminal (MS) parallèlement à la présentation des deuxièmes informations (INF02) par un téléviseur (TV), les premières informations (INFO1) étant reçues par le terminal, mises en mémoire temporaire et affichées avec un temps de retard sous forme synchronisée avec la présentation des deuxièmes informations (INF02), **caractérisé en ce que** le temps de retard dépend d'un système utilisé pour la transmission des deuxièmes informations (INF02).

2. Procédé selon la revendication 1, **caractérisé en ce que** les premières informations (INFO1) permettent un message de retour de l'utilisateur du terminal (MS) en réponse aux deuxièmes informations (INF02).

3. Procédé selon la revendication 2, **caractérisé en ce qu'**un message de retour de l'utilisateur du terminal (MS) est reçu sur un canal radio mobile.

4. Procédé selon l'une des revendications 1 à 3, **caractérisé en ce que** les premières informations (INFO1) sont transmises à une pluralité de terminaux (MS) sur un canal broadcast ou un canal multicast.

5. Procédé selon l'une des revendications 1 à 3, **caractérisé en ce que** les premières informations (INFO1) sont transmises au terminal (MS) sur un canal unicast.

6. Procédé selon l'une des revendications 1 à 5, **caractérisé en ce que** les premières informations (INFO1) sont transmises au téléviseur (TV) synchronisées sur la transmission des deuxièmes informations (INF02).

7. Procédé selon l'une des revendications 1 à 6, **caractérisé en ce qu'**est exécuté un procédé de synchronisation entre les premières informations (INFO1) et les deuxièmes informations (INF02), selon lequel une partie des deuxièmes informations (INF02) enregistrée et envoyée par le terminal (MS) est reçue et un temps de retard par rapport aux premières informations (INFO1) est déterminé.

8. Procédé selon l'une des revendications 1 à 7, **caractérisé en ce qu'**est exécuté un procédé de synchronisation entre les premières informations (INFO1) et les deuxièmes informations (INF02), selon lequel des informations sur un temps de retard qui doit être respecté par le terminal (MS) avant l'affichage des premières informations (INFO1) sont transmises par un autre terminal au terminal (MS).

9. Procédé selon l'une des revendications 1 à 6, **caractérisé en ce qu'**est exécuté un procédé de synchronisation entre les premières informations (INFO1) et les deuxièmes informations (INF02), selon lequel sont émises, par le téléviseur (TV), des informations sur un temps de retard qui doit être respecté par le terminal (MS) avant l'affichage des premières informations (INFO1).

10. Terminal (MS), comportant des moyens pour recevoir et mettre en mémoire temporaire des premières informations (INFO1) qui complètent des deuxièmes informations (INF02), et des moyens pour l'affichage visuel des premières informations (INFO1) parallèlement à la présentation des deuxièmes informations (INF02) par un téléviseur (TV), conçu de manière telle que les premières informations (INFO1) sont affichées avec un temps de retard sous forme synchronisée avec la présentation des deuxièmes informations (INF02), **caractérisé en ce que** le temps de retard dépend d'un système utilisé pour la transmission des deuxièmes informations (INF02).
